(19) Europäisches Patentamt

European Patent Office

Office européen des brevets

(11) EP 0 769 408 A1

(12) EUROPÄISCHE PATENTANMELDUNG

(43) Veröffentlichungstag:
23.04.1997 Patentblatt 1997/17

(51) Int. Cl.$^6$: B60M 1/23

(21) Anmeldenummer: 96116171.8

(22) Anmeldetag: 09.10.1996

(84) Benannte Vertragsstaaten:
BE DE ES FR IT NL

(30) Priorität: 18.10.1995 DE 19538827

(71) Anmelder: SIEMENS AKTIENGESELLSCHAFT
80333 München (DE)

(72) Erfinder: Brodkorb, Albrecht, Dr.
91353 Hausen (DE)

(54) **Vorrichtung zur Aufhängung von zwei parallelen Fahrdrähten**

(57) Die Erfindung betrifft eine Vorrichtung zur Aufhängung von zwei parallelen Fahrdrähten (12,13), die einen Hängerbügel (1) umfaßt, der zwei parallel zueinander und zum Fahrdraht (12,13) angeordnete Schenkel (2,3) aufweist, die durch ein Mittelteil (4) miteinander verbunden und zueinander im Abstand gehalten sind, wobei der Hängerbügel (1) an seinem Mittelteil (4) in einem Aufhängepunkt (5) gelenkig aufgehängt ist und an beiden Schenkeln (2,3) jeweils ein Klemmbügel (8,9) angeordnet ist, der um die Längsachse des Schenkels (2,3) schwenkbar ist, wobei der Aufhängepunkt (5) im Mittelteil (4) durch eine Ausformung derart festgelegt ist, daß bei einer Verdrehung des Hängerbügels (1) um den in der Mitte liegenden Aufhängepunkt (5) der bezüglich der Gewichtskraft wirkende Hebelarm ($a_1$,$b_1$) der beiden Fahrdrähte (12,13) sich so verändert, daß der Hebelarm ($a_1$) für den schwereren Fahrdraht verkürzt ($a_2$) und der Hebelarm ($b_1$) für den leichteren Fahrdraht verlängert ($b_2$) wird.

FIG 3

## Beschreibung

Die Erfindung betrifft eine Vorrichtung zur Aufhängung von zwei parallelen Fahrdrähten.

Derartige Vorrichtungen dienen dazu, Doppelfahrdrähte von oberleitungsgespeisten elektrischen Triebfahrzeugen, insbesondere elektrischen Bahnen, aufzuhängen. Die elektrischen Triebfahrzeuge sind mit Stromabnehmern ausgerüstet, deren Schleifleisten quer zur Fahrtrichtung liegen. Eine Hängerklemme für die Aufhängung von Doppelfahrdrähten , die im wesentlichen die Merkmale a) und b) des Anspruchs 1 umfaßt, ist in der DE 33 26 504 C2 beschrieben. Die bekannte Hängerklemme ist als Waagbalkensystem mit Zentralbolzen zur gelenkigen Aufhängung der Hängerklemme und symmetrischen Zapfenlagern, die von Aufhängebolzen gebildet werden, zur Aufhängung der Klemmbügel ausgeführt. Durch die konstruktiv relativ aufwendige Ausführung mit Waagbalken und Zentralbolzen wird - unabhängig von streckenbedingten Gleisüberhöhungen und dem Verschleißzustand der Schleifleiste - eine relativ gleiche Anpreßkraft der beiden Fahrdrähte auf die Schleifleiste erreicht. Aufgrund des hohen Gewichtes der bekannten Hängerklemme müssen bei Oberleitungen für hohe Geschwindigkeiten jedoch Abstriche bei der Kontaktgüte gemacht werden.

Unterschiede in der Längenänderung der beiden parallel verlegten Fahrdrähte, hervorgerufen durch unterschiedliche Setzung der straff gezogenen Trommelwindungen nach dem Einbau, werden im bekannten Fall durch die nicht mögliche Verschiebbarkeit der Fahrdrähte am Hängerpunkt zueinander verhindert, so daß in den Fahrdrähten unterschiedliche Kräfte wirken, die nur durch Verformung des höher belasteten Fahrdrahtes ausgeglichen werden können. Durch den Kraftangriff über den Hebel, entstehend durch den Abstand zwischen den beiden Fahrdrähten, sind solche Längenänderungen in jedem Fall mit Knickungen der Fahrdrähte verbunden, die sich auf den Verschleiß negativ auswirken. Durch diese Kraftwirkung, die bei allen Systemen mit parallelen Fahrdrähten als Setzungserscheinung auch längere Zeit nach dem Einbau noch entstehen können, wirkt durch den fehlenden Längenausgleich ständig eine Kraft auf die Gelenke, wodurch diese in ihrer Leichtgängigkeit behindert werden, so daß der Lageausgleich für die beiden Fahrdrähte in der Höhe nur bedingt möglich ist. Durch die in der DE 33 26 504 C2 beschriebene symmetrische Anordnung der Gelenkbolzen auf dem Waagbalken ergibt sich für die Höhenlage der Fahrdrähte ein instabiles Gleichgewicht, wodurch sich bereits bei geringen Gewichtskraftunterschieden zwischen den Fahrdrähten im unbelasteten Zustand große Höhendifferenzen zwischen den Fahrdrähten einstellen können.

Aufgabe der vorliegenden Erfindung ist es, eine Vorrichtung zur Aufhängung von zwei parallelen Fahrdrähten zu schaffen, die auch bei hohen Geschwindigkeiten eine hohe Kontaktgüte zwischen den Fahrdrähten und der Schleifleiste des Stromabnehmers gewährleistet.

Die Aufgabe wird erfindungsgemäß durch die in Anspruch 1 angegebenen Merkmale gelöst. Vorteilhafte Ausgestaltungen der Erfindung sind in den weiteren Ansprüchen beschrieben.

Die Vorrichtung nach Anspruch 1 umfaßt einen Hängerbügel, der zwei parallel zueinander und parallel zum Fahrdraht angeordnete Schenkel aufweist. Die Schenkel sind durch ein Mittelteil miteinander verbunden und zueinander im Abstand gehalten. Der Hängerbügel ist an seinem Mittelteil in einen Aufhängepunkt gelenkig aufgehängt. Die gelenkige Aufhängung kann hierbei auf verschiedene Art erreicht werden. Voraussetzung ist lediglich, daß eine flexible Rotationsbewegung um den Mittelteil des Hängerbügels ermöglicht wird. Dies wird z. B. durch eine Aufhängung in einer Kausche oder durch ein kraftschlüssig mit dem Mittelteil des Hängerbügels verbundenes flexibles Aufhängemittel (elasischer Stab, flexibles Seil und dergleichen) erreicht. Erfindungsgemäß ist weiterhin an beiden Schenkeln des Hängerbügels jeweils ein Klemmbügel angeordnet, der um die Längsachse dieses Schenkels schwenkbar ist. Bei der Vorrichtung nach Anspruch 1 ist der Aufhängepunkt im Mittelteil durch eine Ausformung derart festgelegt, daß bei einer Verdrehung des Hängerbügels um den in der Mitte liegenden Aufhängeunkt der bezüglich der Gewichtskraft wirkende Hebelarm der beiden Fahrdrähte sich so verändert, daß der Hebelarm für den schwereren Fahrdraht verkürzt und der Hebelarm für den leichteren Fahrdraht verlängert wird. Damit wird bei der erfindungsgemäßen Vorrichtung eine besonders gute Eigenstabilisierung der Höhenlage beider Fahrdrähte erzielt, wobei sich für das System ein stabiles Gleichgewicht in der Nähe der waagrechten Lage ergibt.

Die erfindungsgemäße Vorrichtung ist konstruktiv einfach aufgebaut und weist gegenüber den bekannten Vorrichtungen zur Aufhängung von zwei parallelen Fahrdrähten ein geringeres Gewicht auf, wodurch die Kontaktgüte zwischen den Fahrdrähten und der Schleifleiste des Stromabnehmers deutlich verbessert wird.

Der Hängerbügel kann mehrteilig oder einstückig ausgebildet sein. Bei einem dreiteilig aufgebauten Hängerbügel sind das Mittelteil und die beiden Schenkel als separate Teile ausgebildet, die entsprechend dem Anwendungsfall kraftschlüssig und gegebenenfalls auch formschlüssig miteinander verbunden werden. Bei einem zweiteiligen Aufbau liegt die Verbindungsstelle zweckmäßigerweise im Mittelteil des Hängerbügels.

Eine Vorrichtung gemäß Anspruch 2 ist besonders einfach herzustellen und ermöglicht eine nochmals vereinfachte Montage.

Eine Vorrichtung nach Anspruch 3 läßt Langsbewegungen der Fahrdrähte zueinander zu, ohne die Kontaktgüte zwischen den Fahrdrähten und der Schleifleiste des Stromabnehmers zu beeinträchtigen. Diese Vorrichtung ist deshalb besonders gut für den Einbau in Oberleitungsanlagen geeignet, bei denen noch Setzungserscheinungen der Fahrdrähte zu erwarten sind.

Weitere Vorteile und Einzelheiten der Erfindung ergeben sich aus der nachfolgenden Beschreibung von drei Ausführungsbeispielen anhand der Zeichnung und in Verbindung mit den weiteren Ansprüchen. Es zeigen:

FIG 1     eine Vorderansicht einer ersten Ausführungsform der erfindungsgemäßen Vorrichtung,

FIG 2     eine Seitenansicht der Vorrichtung nach FIG 1,

FIG 3     eine perspektivische Ansicht der Vorrichtung nach FIG 1,

FIG 4     eine perspektivische Ansicht einer zweiten Ausführungsform der erfindungsgemäßen Vorrichtung,

FIG 5     eine perspektivische Ansicht einer dritten Ausführungsform der erfindungsgemäßen Vorrichtung,

FIG 6 und 7     die Kinematik im Aufhängepunkt der Vorrichtungen gemäß FIG 1-5 bei einer vertikalen Auslenkung des Hängerbügels.

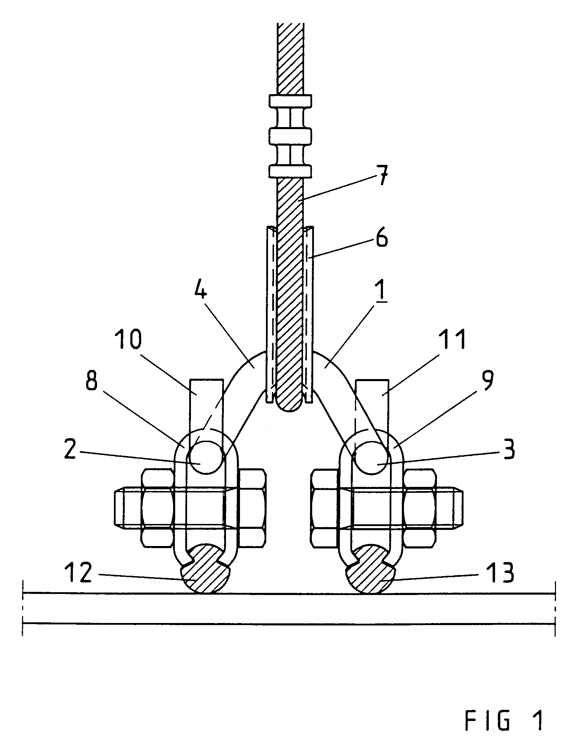

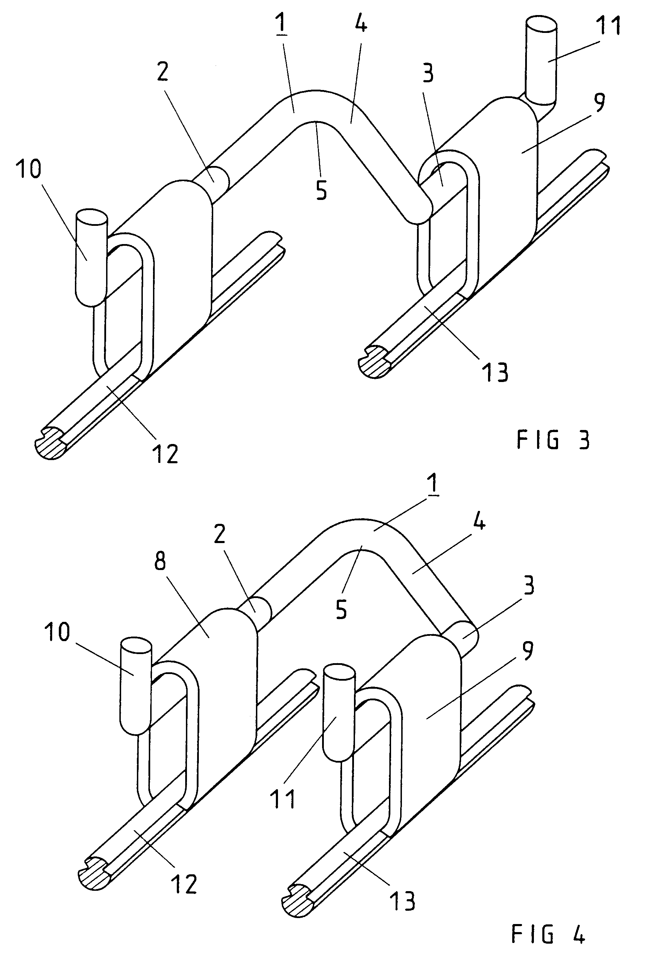

In den FIG 1 bis 5 ist mit 1 ein einstückig ausgebildeter Hängerbügel bezeichnet, der zwei parallel zueinander angeordnete Schenkel 2 und 3 aufweist. Die Schenkel 2 und 3 sind durch ein Mittelteil 4 miteinander verbunden und zueinander im Abstand gehalten.

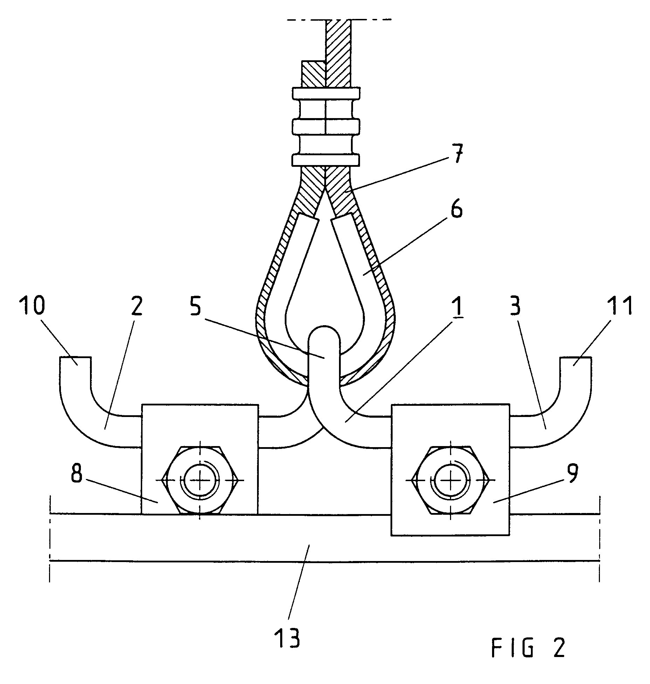

Der Hängerbügel 1 ist an seinem Mittelteil 4 in einem Aufhängepunkt 5 gelenkig aufgehängt. Zur gelenkigen Aufhängung des Hängerbügels 1 dient in dem in FIG 1 und 2 gezeigten Ausführungsbeispiel eine Kausche 6, die von einem Hängerseil 7 umschlossen ist.

An beiden Schenkeln 2 und 3 ist jeweils ein Klemmbügel 8 bzw. 9 angeordnet. In den in FIG 1 bis 5 dargestellten Ausführungsbeispielen sind die Klemmbügel 8 und 9 auf den Schenkel 2 bzw. 3 aufgesteckt. Damit ist auf konstruktiv einfache Weise sichergestellt, daß die Klemmbügel 8 und 9 um die Längsachse des betreffenden Schenkels 2 bzw. 3 schwenkbar sind. Gleichzeitig sind die Klemmbügel 8 und 9 auf den Schenkeln 2 und 3 verschiebbar. Die axiale Verschiebbarkeit der Klemmbügel 8 und 9 ist durch Anschläge 10 und 11, die jeweils von einem Abbug am freien Ende der Schenkel 2 und 3 gebildet sind, begrenzt.

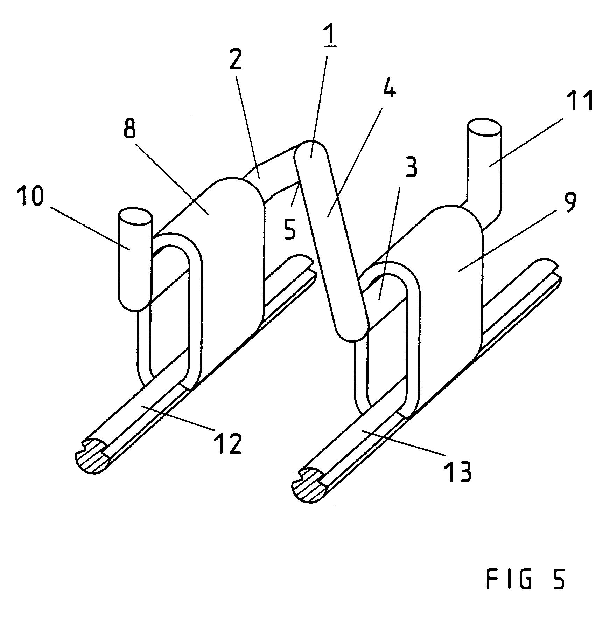

Bei der ersten Ausführungsform (FIG 1 bis 3) der erfindungsgemäßen Vorrichtung sind die parallelen Schenkel 2 und 3 des Hängerbügels 1 zueinander versetzt angeordnet, wohingegen bei dem zweiten Ausführungsbeispiel (FIG 4) und bei dem dritten Ausführungsbeispiel (FIG 5) die parallelen Schenkel 2 und 3 gegenüberliegend angeordnet sind.

Durch das unterschiedlich geformte Mittelteil 4 erstrecken sich die Schenkel 2 und 3 der zweiten Ausführungsform (FIG 4) in die gleiche Richtung, wohingegen sich die Schenkel 2 und 3 der dritten Ausführungsform (FIG 5) - ebenso wie die Schenkel 2 und 3 der ersten Ausführungsform (FIG 1 bis 3) - in die entgegengesetzte Richtung erstrecken.

Aufgrund der parallelen Anordnung der Schenkel 2 und 3 zueinander, verlaufen bei allen gezeigten Ausführungsbeispielen die in den Klemmbügeln 8 und 9 gehaltenen Rillen-Fahrdrähte 12 und 13 ebenfalls parallel zueinander.

Die erfindungsgemäße Vorrichtung ist nicht nur zur parallelen Aufhängung von Rillen-Fahrdrähten geeignet; abhängig von der Ausgestaltung der Klemmbügel 8 und 9 können auch andere Fahrdrähte, wie z.B. Rund-Fahrdrähte, gehalten werden.

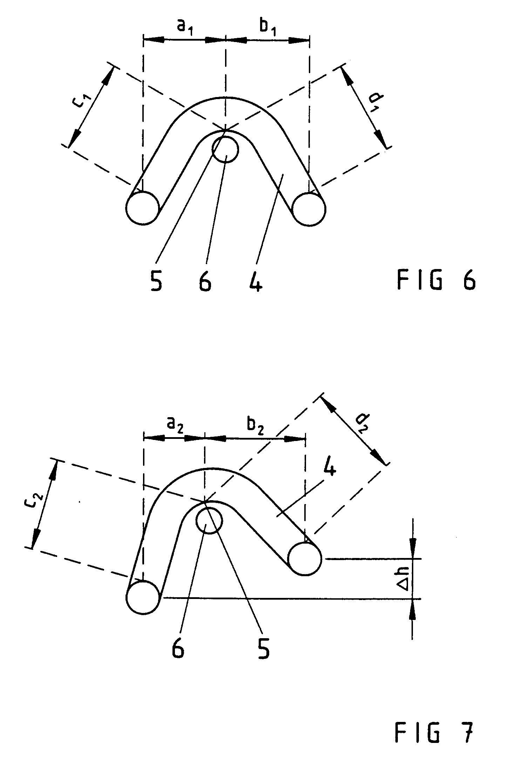

Wie aus FIG 6 und 7 ersichtlich, ist erfindungsgemäß der Aufhängepunkt 5 im Mittelteil 4 durch seine Ausformung derart festgelegt, daß bei einer vertikalen Auslenkung $\Delta h$ der Abstand c zwischen dem Aufhängepunkt 5 und dem Schenkel 2 sowie der Abstand d zwischen dem Aufhängepunkt 5 und dem Schenkel 3 konstant bleiben. Mit anderen Worten, es gilt $c_1 = c_2 = d_1 = d_2$, wobei mit Index 1 die Abstände vor und mit Index 2 die Abstände nach der vertikalen Auslenkung $\Delta h$ bezeichnet sind.

Der seitliche Abstand a zwischen dem Schenkel 2 und dem Aufhängepunkt 5 verringert sich jedoch bei einer vertikalen Auslenkung $\Delta h$ von $a_1$ auf $a_2$. Demgegenüber vergrößert sich der seitliche Abstand b des Schenkels 3 zum Aufhängepunkt 5 von $b_1$ auf $b_2$.

Durch die in FIG 6 und 7 erfindungsgemäße Ausbildung des Mittelteils 4 in seinem Aufhängepunkt 5 erhält man eine Eigenstabilisierung für die Höhenlage der Rillen-Fahrdrähte 12 und 13.

## Patentansprüche

1. Vorrichtung zur Aufhängung von zwei parallelen Fahrdrähten, die folgende Merkmale umfaßt:

     a) einen Hängerbügel (1), der zwei parallel zueinander und zum Fahrdraht (12,13) angeordnete Schenkel (2,3) aufweist, die durch ein Mittelteil (4) miteinander verbunden und zueinander im Abstand gehalten sind, wobei

     b) der Hängerbügel (1) an seinem Mittelteil (4) in einem Aufhängepunkt (5) gelenkig aufgehängt ist und an beiden Schenkeln (2,3) jeweils ein Klemmbügel (8,9) angeordnet ist, der um die Längsachse des Schenkels (2,3) schwenkbar ist, wobei

     c) der Aufhängepunkt (5) im Mittelteil (4) durch eine Ausformung derart festgelegt ist, daß bei einer Verdrehung des Hängerbügels (1) um den in der Mitte liegenden Aufhängepunkt (5) der bezüglich der Gewichtskraft wirkende Hebelarm ($a_1$,$b_1$) der beiden Fahrdrähte (12,13) sich so verändert, daß der Hebelarm ($a_1$) für den schwereren Fahrdraht verkürzt ($a_2$) und der Hebelarm ($b_1$) für den leichteren Fahr-

draht verlängert ($b_2$) wird.

2. Vorrichtung nach Anspruch 1, wobei der Hängerbügel (1) einstückig ausgebildet ist.

3. Vorrichtung nach Anspruch 1, wobei die Klemmbügel (8,9) längsverschiebbar an den Schenkeln (2,3) angeordnet sind.

4. Vorrichtung nach Anspruch 3, wobei die Längsverschiebbarkeit der Klemmbügel (8,9) durch einen Anschlag (10,11) begrenzt ist.

5. Vorrichtung nach Anspruch 1, wobei die Schenkel (2,3), in Langsachse der Fahrdrähte (12,13) betrachtet, zueinander versetzt angeordnet sind.

6. Vorrichtung nach Anspruch 1, wobei die Schenkel (2,3), quer zu den Fahrdrähten (12,13) betrachtet, deckungsgleich angeordnet sind.

FIG 1

FIG 2

FIG 3

FIG 4

FIG 5

FIG 6

FIG 7

Europäisches
Patentamt

**EUROPÄISCHER RECHERCHENBERICHT**

Nummer der Anmeldung

EP 96 11 6171

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | FR 1 034 503 A (REGIE AUTONOME DES TRANSPORT) | 1,2 | B60M1/23 |
| A | * das ganze Dokument * | 3,4 | |
| | --- | | |
| Y | US 1 401 650 A (W. SCHAAKE) | 1,2 | |
| A | * das ganze Dokument * | 5 | |
| | --- | | |
| D,A | DE 33 26 504 A (ZIENERT) | 1 | |
| | * Zusammenfassung; Abbildungen 1-4 * | | |
| | ----- | | |

RECHERCHIERTE
SACHGEBIETE (Int.Cl.6)

B60M

Der vorliegende Recherchenbericht wurde für alle Patentansprüche erstellt

| Recherchenort | Abschlußdatum der Recherche | Prüfer |
|---|---|---|
| DEN HAAG | 6.Februar 1997 | Rieutort, A |